# EUROPÄISCHE PATENTANMELDUNG

(11) **EP 3 357 348 A1**
(43) Veröffentlichungstag der Anmeldung: **08.08.2018**
(21) Anmeldenummer: 18155239.9
(22) Anmeldetag: 06.02.2018
(51) Int. Cl.: A23L 5/42

(54) **HERSTELLUNG UND FÄRBUNG VON PULVERFÖRMIGEN LEBENSMITTELN**

(30) Priorität: 07.02.2017 DE 102017001109
(71) Anmelder: Merck Patent GmbH, 64293 Darmstadt (DE)
(72) Erfinder: Peters, Alexander, 69469 Weinheim (DE); Schweinfurth, Ralf, 64287 Darmstadt (DE)

(57) **Zusammenfassung**

Die vorliegende Erfindung betrifft ein Verfahren zur Herstellung und Färbung von pulverförmigen Lebensmitteln, welches sich dadurch auszeichnet, dass ungefärbte pulverförmige Lebensmittel mit Effektpigmenten, die auf plättchenförmigen Substraten basieren, gemischt werden.

## Beschreibung

Die vorliegende Erfindung betrifft ein Verfahren zur Herstellung und Färbung von pulverförmigen Lebensmitteln, welches sich dadurch auszeichnet, dass ungefärbte pulverförmige Lebensmittel mit Effektpigmenten, die auf plättchenförmigen Substraten basieren, gemischt werden.

Außer für funktionelle Verwendungen werden Effektpigmente, die auf plättchenförmigen Substraten basieren, immer mehr zur optischen Aufwertung von Produkten, z. B. in der Lebensmitteltechnik oder Kosmetik, eingesetzt, da schöne Farben und Effekte beim Betrachter und Konsumenten angenehme subjektive Empfindungen hervorrufen. Bei der Herstellung von Effektpigmenten werden strengste Anforderungen an die Reinheit und die Qualität der Pigmente gestellt. Daher werden Effektpigmente, vorzugsweise Perlglanz- und Interferenzpigmente, auch im Lebensmittelbereich zur Verbesserung des Farbeffektes bzw. zur Farbgebung eingesetzt.

Perlglanzpigmente können bei der Verwendung im Lebensmittelbereich in einer Vielzahl von Flüssigkeiten suspendiert werden, wie z.B. Wasser, Ethanol, Säuren oder auch Öl. Hierbei kommt es zu einer homogenen Verteilung bzw. Suspension der Perlglanzpigmente.

Es besteht aber der Bedarf Lebensmittel vorliegend als Pulver oder als Granulat direkt zu färben, ohne dass es vorher in eine Flüssigkeit suspendiert werden muss. Bisher ist es nur möglich Färbemittel für Zutaten z.B. für pulverförmige Suppen, wie z.B. kleinteilige Nudeln, gesondert auf der Oberfläche aufzubringen, sofern ein Fixiermittel oder ein Haftmittel verwendet wird. Dies bedeutet einen weiteren, notwendigen Prozeßschritt, und den zusätzlichen Einsatz anderer Zusatzstoffe, wie z.B. Cellulosen oder Schellack, zur Anhaftung bzw. Fixierung des Färbemittels auf der jeweilgen Produktoberfläche.

Aufgabe der vorliegenden Erfindung ist es daher ein gegenüber dem Stand der Technik im Hinblick auf Wirtschaftlichkeit und Akzeptanz verbessertes Verfahren für die Färbung pulverförmiger Lebensmittel zur Verfügung zu stellen.

Überraschenderweise wurde gefunden, dass auf plättchenförmigen Substraten basierende Effektpigmente vorteilhaft zur Einfärbung pulverförmiger Lebensmittel eingesetzt werden können, ohne dass diese Zutaten auf der Oberfläche gesondert gefärbt werden müssen. So können beispielsweise kleinteilige Nudeln ohne separate Vorbehandlung bzw. Vorfärbung mittels Perlglanzpigmenten durch einfaches Mischen eingefärbt werden. Dadurch erübrigt sich der Einsatz zusätzlicher Binde- bzw. Fixierungsmittel, wie z.B. Cellulosen, Gummi Arabicum, Schellack, etc. Eine ausreichende Fixierung bzw. Anhaftung der Effektpigmente auf der Produktoberfläche eines getrockneten oder pulverförmigen Lebensmittels erfolgt durch reine physikalische Adhäsions-Effekte, die durch das simple Vermischen der Zutaten mit ein oder mehreren Effektpigmenten hervorgerufen wird. Von Vorteil ist neben der einfachen Handhabungsweise, dass kein weiterer Zusatzstoff im Lebensmittel erforderlich ist, da Zusatzstoffe in der Regel auf ein absolut notwendiges Maß zu beschränken sind, d. h., jeder weiterer Zusatzstoff ist unerwünscht.

Der Begriff "pulverförmige Lebensmittel" umfasst in dieser Anmeldung alle Lebensmittel in Pulver- oder Granulatform, insbesondere Gewürze, Gewürzmischungen, Backmischungen, Vormischungen für die Fleischwarenindustrie, Instant-Getränke oder Instant-Suppen. Bevorzugt umfasst der Begriff Instant-Getränke oder Instant-Suppen. Besonders bevorzugt handelt es sich um Instantsuppen, wie z.B. Tütensuppen, Trockensuppen, beispielsweise Nudelsuppen, oder ähnliche Erzeugnisse. Das Lebensmittel-Pulver oder -Granulat weist dabei in der Regel Partikelgrößen von < 10 mm, vorzugsweise < 8 mm und insbesondere < 5 mm, auf.

Instantsuppen, wie z.B. Nudelsuppen, sind industriell hergestellte Mischungen aus getrockneten Zutaten wie Nudeln, Gemüse, Fett, Geschmacksverstärkern, wie z.B. Mononatriumglutamat, Aromastoffen und Gewürzen, die so vorgegart oder vorbehandelt sind, dass sie durch Vermischen mit heißem Wasser und ggf. kurzes Kochen eine verzehrfertige Suppe ergeben. Neben der einfachen und schnellen Art der Zubereitung zeichnen sich Instantsuppen durch eine sehr lange Haltbarkeit aus, da sie praktisch kein Wasser enthalten und luftdicht verpackt sind.

Zur Erzielung eines besonderen optischen Farbeffekts, wie beispielsweise eines Perlglanzeffektes, werden ein oder mehrere Effektpigmente, vorzugsweise Perlglanzpigmente und/oder Interferenzpigmente, zum pulverförmigen Lebensmittel hinzugefügt und mit diesem vermischt. Nach der entsprechenden Zubereitung dieser so behandelten Lebensmittel (z.B. durch Aufgießen mit heißem Wasser) entsteht der gewünschte optische Effekt, beispielsweise ein Perlglanzeffekt, z.B. in der fertigen Suppe. Besonders in klaren Suppen kommt dieser optische Effekt sehr schön zur Geltung.

Bevorzugte Effektpigmente sind Perlglanzpigmente und Interferenzpigmente basierend auf plättchenförmigen Substraten, die mit ein oder mehreren Metalloxiden und/oder Metallhydroxiden beschichtet sind.

Unter dem Begriff plättchenförmige Substrate sind alle dem Fachmann bekannten plättchenförmigen Substrate zu verstehen. Geeignete Basissubstrate für die Effektpigmente, wie z.B. Perlglanzpigmente und Interferenzpigmente, sind transparente oder semitransparente plättchenförmige Substrate. Insbesondere geeignet sind Schichtsilikate, Talkum, Kaolin, plättchenförmige Eisen- oder Aluminiumoxide, Glas-, SiO₂-, TiO₂-Plättchen, plättchenförmige Mischoxide, wie z. B. FeTiO₃, Fe₂TiO₅, oder andere vergleichbare Materialien, abhängig von der jeweiligen gesetzlichen Zulässigkeit für die Verwendung bei Lebensmitteln bzw. pharmazeutischen Produkten.

Die Größe der Basissubstrate ist an sich nicht kritisch und kann auf den jeweiligen Anwendungszweck abgestimmt werden. In der Regel haben die plättchenförmigen Substrate eine Dicke von 0,005 bis 10 µm, insbesondere von 0,05 bis 5 µm. Die Ausdehnung in den beiden anderen Bereichen beträgt üblicherweise 1 bis 500 µm, vorzugsweise 2 bis 200 µm, und insbesondere 5 bis 150 µm. Ganz besonders bevorzugte Perlglanzpigmente weisen Partikelgrößen von 10-60 µm oder 5-25 µm oder 10-150 µm oder 5-50 µm auf.

Bevorzugte Effektpigmente, wie z.B. Perlglanzpigmente, basieren auf natürlichen Glimmerplättchen, synthetischen Glimmerplättchen, SiO₂-Plättchen, Al₂O₃-Plättchen, TiO₂-Plättchen, Glasplättchen, Fe₂O₃-Plättchen, insbesondere synthetischen Glimmerplättchen, natürlichen Glimmerplättchen und SiO₂-Plättchen (Nr. E555 bzw. E551 in der Liste der in der Europäischen Union zugelassenen Lebensmittelzusatzstoffe). Die synthetischen Plättchen, wie z.B. synthetische Glimmerplättchen, SiO₂-Plättchen, Al₂O₃-Plättchen, TiO₂-Plättchen, Glasplättchen, können dotiert oder undotiert sein. Geeignete Dotiermittel sind u.a. Metalloxide, wie z.B. TiO₂, ZrO₂, SnO₂.

Als Perlglanzpigmente werden Pigmente auf der Basis plättchenförmiger, transparenter oder semitransparenter Substrate aus z.B. Schichtsilikaten, wie etwa natürlichem Glimmer, synthetischem Glimmer, Talkum, Sericit, Kaolin, aus Glas oder anderen silikatischen Materialien verwendet, die mit farbigen oder farblosen Metalloxiden wie z.B. TiO₂, Titansuboxide, Titanoxinitride, Fe₂O₃, Fe₃O₄, SnO₂, ZnO und anderen Metalloxiden allein oder in Mischung in einer einheitlichen Schicht oder in aufeinanderfolgenden Schichten beschichtet sind. Besonders bevorzugte Perlglanzpigmente basierend auf synthetischen oder natürlichen Glimmerplättchen, sind mit ein oder mehreren Metalloxiden aus der Gruppe TiO₂, Fe₂O₃ oder Fe₃O₄ oder deren Gemische beschichtet oder weisen eine Multilayer-Beschichtung auf bestehend aus alternierend hoch- und niedrigbrechenden Schichten, wie z.B. TiO₂ - SiO₂ - TiO₂.

Weiterhin bevorzugt sind mit TiO₂ und/oder Fe₂O₃ beschichtete SiO₂- oder Al₂O₃-Plättchen. Die Beschichtung der SiO₂-Plättchen mit ein oder mehreren Metalloxiden kann z.B. erfolgen wie in der WO 93/08237 (naßchemische Beschichtung) oder DE-OS 196 14 637 (CVD-Verfahren) beschrieben.

Auch bei den auf die plättchenförmigen Substrate aufgebrachten Metalloxiden handelt es sich vorzugsweise um für den Menschen verzehrbare Materialien in Lebensmittelqualität (Nr. E 171 (TiO₂) bzw. E 172 (Eisenoxid) in der Liste der in der Europäischen Union zugelassenen Lebensmittelzusatzstoffe).

Unter dem Begriff Titandioxid ist TiO₂ zu verstehen (Nr. E 171 in der Liste der in der Europäischen Union zugelassenen Lebensmittelzusatzstoffe).

Unter dem Begriff Eisenoxid sind sowohl Fe₂O₃ als auch Fe₃O₄ zu verstehen (Nr. E 172 in der Liste der in der Europäischen Union zugelassenen Lebensmittelzusatzstoffe).

Weiterhin sind bevorzugt Perlglanzpigmentgemische, die unterschiedliche Partikelgrößen aufweisen. Besondere Effekte können erzielt werden, wenn Perlglanzpigmente mit "kleinen" Partikelgrößen wie z.B. 5-25 µm oder 10-60 µm mit Perlglanzpigmenten mit "großen" Partikelgrößen, wie z.B. 10-150 µm, gemischt werden.

Die Dicke der einzelnen Schichten, vorzugsweise ein oder mehrere Metalloxidschichten, auf dem Basissubstrat beträgt vorzugsweise 10-500 nm, insbesondere 20-400 nm und ganz besonders bevorzugt 30-350 nm.

Bei Mehrschichtpigmenten, die auf der Substratoberfläche vorzugsweise alternierend hoch- und niedrigbrechende Schichten (A)(B)(A) aufweisen, besitzt die hochbrechende Schicht (Schicht A) in der Regel Schichtdicken von 10-500 nm, vorzugsweise 20-400 nm und insbesondere 30-350 nm. Die Dicke der niedrigbrechenden Schicht (Schicht B) beträgt vorzugsweise 10-500 nm, vorzugsweise 20-400 nm, insbesondere 30-350 nm.

Unter hochbrechenden Schichten sind in dieser Anmeldung Schichten mit einem Brechungsindex von ≥ 1,8 zu verstehen, wie z.B. TiO₂, Fe₂O₃, Fe₃O₄, während niedrigbrechende Schichten einen Brechungsindex von < 1,8 aufweisen, wie z.B. SiO₂, Al₂O₃. AlO(OH).

Die Effektpigmente, vorzugsweise Perlglanzpigmente, können mehrere, gleiche oder verschiedene Kombinationen an Schichtpaketen enthalten, bevorzugt ist aber die Belegung des Substrats bei Mehrschichtpigmenten mit nur einem Schichtpaket (A) (B) (A). Zur Intensivierung der Farbstärke kann das erfindungsgemäße Pigment bis zu 4 Schichtpakete enthalten, wobei die Dicke aller Schichten auf dem Substrat 3 µm allerdings nicht überschreiten sollte. Vorzugsweise wird bei Mehrschichtpigmenten mit 3 oder mehr Schichten auf der Substratoberfläche eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (A). Als hochbrechende Schicht kommen vorzugsweise TiO₂, Fe₂O₃ und/oder Fe₃O₄ oder ein Gemisch aus Titanoxid und Eisenoxid in Frage. Das TiO₂ kann dabei in der Rutil- oder in der Anatasmodifikation vorliegen.

Als farblose niedrigbrechende für die Beschichtung (B) geeignete Materialien sind vorzugsweise Metalloxide bzw. die entsprechenden Oxidhydrate, wie z. B. SiO₂, Al₂O₃, AlO(OH), B₂O₃, MgF₂, MgSiO₃ oder ein Gemisch der genannten Metalloxide, geeignet entsprechend der gesetzlichen Zulassungen zur Verwendung bei Lebensmitteln bzw. pharmazeutischen Produkten.

Bei den besonders bevorzugten Perlglanzpigmenten für den Lebensmittelbreich handelt es sich um Glimmer-Plättchen (synthetisch oder natürlich) oder SiO₂-Plättchen, die mit einer Metalloxidschicht, vorzugsweise TiO₂ oder Fe₂O₃ , ferner Fe₃O₄ oder ein Gemisch aus TiO₂ und Fe₂O₃, beschichtet sind. Die Dicke der Metalloxidschicht oder der Metalloxidmischschicht beträgt 10 nm bis 500 nm. Die Dicken der Plättchen liegen im Bereich von 200 nm bis 900 nm. Derartige Pigmente zeichnen sich je nach Dicke der eingesetzten Plättchen und der aufgebrachten Metalloxidschichten sowie nach Art des Metalloxids durch besonders intensive Interferenzfarben und/oder durch starke winkelabhängige Farbwechseleffekte aus. Letztere zeigen sich dabei so, dass ein Betrachter beim Wechsel seiner Beobachtungsposition zum pigmentierten Objekt unterschiedliche Farben wahrnimmt.

Bevorzugte Effektpigmente sind insbesondere ausgewählt aus den nachfolgend genannten Pigmenten:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch.

Die für den Lebensmittelbereich zugelassenen Perlglanz- und Interferenzpigmente sind im Handel erhältlich, beispielsweise unter der Marke Candurin® von der Fa. Merck KGaA.

Die eingefärbten Lebensmittel zeichnen sich durch einen Farbeffekt aus, der auf der Lichtbrechung bzw. Reflexion der Effektpigmente beruht und beim Betrachter und Konsumenten angenehme subjektive Empfindungen hervorruft. Durch das Mischen eines oder mehrerer Effektpigmente mit dem pulverförmigen Lebensmittel ist es möglich den Produkten interessante Farbtöne zu verleihen sowie gleichzeitig Wünsche nach neuen Varianten oder Nuancen von Farbtönen aufgrund neuer Trends in der Mode zu berücksichtigen.

Zur erfindungsgemäßen Einfärbung von pulverförmige Lebensmitteln können sowohl einzelne Effektpigmente als auch Mischungen verschiedener Effektpigmente, insbesondere Perlglanzpigmente, verwendet werden. Dem Mischungsverhältnis sind dabei keine Grenzen gesetzt. Es ist aber auch möglich Effektpigmente in Mischung einzusetzen, die sich lediglich durch ihre Partkelgrößen unterscheiden, d.h. Mischung von "groben" mit "feinen" Pigmenten.

Typischerweise enthält das pulverförmige Lebensmittel 0,01 - 8 Gew.-% ein oder mehrerer Effektpigmente, insbesondere Perlglanzpigmente und/oder Interferenzpigmente, bezogen auf das Lebensmittel, bevorzugt 0,02 - 4 Gew.-%. Die erforderliche Menge an Effektpigment steigt mit der zur Zubereitung des pulverförmigen Lebensmittel zu verwendenden Wassermenge.

Die Effektpigmente, vorzugsweise Perlglanzpigmente, lassen sich durch einfache, gängige verfahrenstechnische Mischprozesse mit pulverförmigen Lebensmitteln und/oder deren Bestandteilen vermischen. Die Effektpigmente selbst neigen dabei nicht zu Agglomeratbildung. Auch führt die Vermischung zu einer sehr gleichmäßigen Verteilung der Effektpigmente im pulverförmigen Lebensmittel, wobei je nach physikalischer Beschaffenheit der Zutaten eine mehr oder weniger starke physikalische Fixierung auf den jeweilgen Produktoberflächen zu beobachten ist. Diese Farbfixierung bleibt auch nach und während dem Kochprozess von pulverförmigen Suppen bestehen und ist visuell im fertigen Endprodukt für den Verbraucher erkennbar.

Gegenstand der Erfindung sind ebenfalls pulverförmige Lebensmittel, die Fett, Aroma, Gewürze, ein oder mehrere Effektpigmente, und optional weitere Zutaten enthalten.

Gegenstand der Erfindung sind weiterhin Instant-Suppen oder Trockensuppen, die getrocknetes Gemüse, Fett, Gewürze, ein oder mehrere Effektpigmente und optional weitere Zutaten, z.B. Nudeln, Verdicker, Geschmacksverstärker, etc. enthalten. Besonders bevorzugt sind Instant-Suppen, insbesondere Nudelsuppen.

Die nachfolgenden Beispiele sollen die Erfindung erläutern, ohne sie jedoch zu begrenzen. Sofern nicht anders angegeben bedeuten Prozentangaben Gewichtsprozent.

### Beispiele:

### Vorgehensweise für Beispiele 1 - 10:

Die in der Tabelle genannten Mengen an Instant-Suppe und Perlglanzpigment werden durch Schütteln vermischt und die hergestellten Mischungen in die in den Beispielen genannten Mengen an kochendem Wasser eingerührt. Danach lässt man weitere 5 Minuten kochen. Nach dem Kochen ist sowohl in der flüssigen Phase der Suppe, als auch an den Zutaten, wie z.B. den Nudeln, das hinzugefügte Perlglanzpigment deutlich erkennbar.

| **Nr.** | **Instant-Suppe** | **Menge Suppe** | **Perlglanzpigment** | **Zugabe kochendes Wasser** |
|---|---|---|---|---|
| 1 | Maggi "Buchstaben-Suppe" | 97,5 g | Candurin® Gold Sparkle 2,5 g | 1000 ml |
| 2 | Maggi "Frühlingssuppe" | 62 g | Candurin® Gold Lustre 1 g | 1.000 ml |
| 3 | Maggi "Feuerwehrsuppe" | 58,5 g | Candurin® NXT Ruby Red 1,5 g | 1.000 ml |
| 4 | Maggi "Feuerwehrsuppe" | 58 g | Candurin® Red Lustre 1 g | 1000 ml |
| | | | Candurin® Red Sparkle 1 g | |
| 5 | Maggi "Rittersuppe" | 97 g | Candurin® Silver Sparkle 3g | 1000 ml |
| 6 | Maggi "Sternchensuppe" | 95 g | Candurin® Gold Sparkle 5g | 750 ml |
| 7 | Knorr "Buchstaben-Suppe" | 77,5 g | Candurin® Gold Shimmer 4,5 g | 750 ml |
| 8 | Knorr "Zahlen-Suppe" | 76,5 g | Candurin® Silver Sparkle 7,5 g | 750 ml |
| 9 | Knorr "Zahlen-Suppe" | 81 g | Candurin® Red Sparkle 3g | 750 ml |
| 10 | Knorr "Buchstaben-Suppe" | 81,4 g | Candurin® Silver Lustre 0,3 g Candurin® Gold Lustre 0,3 g | 750 ml |
| 11 | Maggi "Sternchensuppe" | 95 g | Candurin® Gold Sparkle 6 g | 1000 ml |

Die in den Beispielen verwendeten Perlglanz- und Interferenzpigmente (Candurin®-Pigmente der Fa. Merck) basierend auf Glimmer- oder SiO₂-Plättchen besitzen folgende Zusammensetzung und Partikelgrößen:

| | |
|---|---|
| Candurin® Gold Lustre: | Glimmer (E555) beschichtet mit TiO₂ (E171) und Fe₂O₃ (E172ii); 10-60 µm |
| Candurin® Gold Sparkle: | Glimmer (E555) beschichtet mit TiO₂ (E171) und Fe₂O₃ (E172ii); 10-150 µm |
| Candurin® Gold Shimmer: | Glimmer (E555) beschichtet mit TiO₂ (E171); 10-60 µm |
| Candurin® Silver Lustre: | Glimmer (E555) beschichtet mit TiO₂ (E171); 10-60 µm |
| Candurin® Silver Sparkle: | Glimmer (E555) beschichtet mit TiO₂ (E171); 10-150 µm |
| Candurin® Red Sparkle: | Glimmer (E555) beschichtet mit Fe₂O₃ (E172ii); 10-150 µm |
| Candurin® NXT Ruby Red: | SiO₂-Plättchen (E551) beschichtet mit Fe₂O₃ (E172ii); 5-50 µm |
| Candurin® Red Lustre: | Glimmer (E555) beschichtet mit Fe₂O₃ (E172ii); 10-60 µm |

## Patentansprüche

1. Verfahren zur Herstellung eines gefärbten, pulverförmigen Lebensmittels, **dadurch gekennzeichnet, dass** das ungefärbte pulverförmige Lebensmittel mit ein oder mehreren Effektpigmenten basierend auf plättchenförmigen Subtraten vermischt wird.

2. Verfahren nach Anspruch 1, **dadurch gekennzeichnet, dass** das Effektpigment ein Perlglanzpigment, ein Interferenzpigment oder ein Multilayerpigment ist.

3. Verfahren nach Anspruch 1 oder 2, **dadurch gekennzeichnet, dass** das plättchenförmige Substrat ein natürliches Glimmerplättchen, ein synthetisches Glimmerplättchen, Talkum, Kaolin, ein Glasplättchen, ein Siliziumdioxid-Plättchen, ein Titandioxid-Plättchen, ein Aluminiumoxid-Plättchen oder ein Eisenoxidplättchen ist.

4. Verfahren nach einem oder mehreren der Ansprüche 1 bis 3, **dadurch gekennzeichnet, dass** das plättchenförmige Substrat mit ein oder mehreren Schichten aus Metalloxiden und/oder Metalloxidgemischen vollständig beschichtet ist.

5. Verfahren nach einem oder mehreren der Ansprüche 1 bis 4, **dadurch gekennzeichnet, dass** plättchenförmige Substrat mit Titandioxid und/oder Eisenoxid beschichtet ist.

6. Verfahren nach einem oder mehreren der Ansprüche 1 bis 5, **dadurch gekennzeichnet, dass** das Effektpigment ausgewählt ist der Gruppe der nachfolgend genannten Pigmente:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃ SiO₂-Plättchen + TiO₂/Fe₂O₃-Gemisch + SiO₂ + TiO₂/Fe₂O₃-Gemisch SiO₂-Plättchen + Fe₂O₃-Gemisch + SiO₂ + TiO₂/Fe₂O₃-Gemisch.

7. Verfahren nach einem oder mehreren der Ansprüche 1 bis 6, **dadurch gekennzeichnet, dass** das Effektpigment in Mengen von 0,01 - 8 Gew.-% bezogen auf das Lebensmittel eingesetzt wird.

8. Verfahren nach einem oder mehreren der Ansprüche 1 bis 7, **dadurch gekennzeichnet**, **dadurch gekennzeichnet, dass** das pulverförmige Lebensmittel ausgewählt ist aus der Gruppe Instant-Suppe oder Trockensuppe, Instant-Getränke, Gewürze, Gewürzmischung, Backmischungen, Vormischungen für die Fleischwarenindustrie.

9. Pulverförmiges Lebensmittel, **dadurch gekennzeichnet, dass** es Fett, Aroma, Gewürze, ein oder mehrere Effektpigmente und optional weitere Zutaten enthält.

10. Instant-Suppe oder Trockensuppe, **dadurch gekennzeichnet, dass** sie getrocknetes Gemüse, Fett, Gewürze, ein oder mehrere Effektpigmente und optional weitere Zutaten enthält.

11. Instant-Suppe oder Trockensuppe nach Anspruch 10, **dadurch gekennzeichnet, dass** es sich um eine Nudelsuppe handelt.
